# FASCICULE DE BREVET EUROPEEN

(11) **EP 1 369 812 B1**
(45) Date de publication et mention de la délivrance du brevet: **14.12.2005**
(21) Numéro de dépôt: 03011294.0
(22) Date de dépôt: 17.05.2003
(51) Int. Cl.: G06K 7/00

(54) **Procédé anticollision pour module électronique sans contact**
Antikollisionsverfahren für drahtloses elektronisches Modul
Anticollision method for wireless electronic module

(30) Priorité: 04.06.2002 FR 0206831
(43) Date de publication de la demande: 10.12.2003
(73) Titulaire: STMicroelectronics S.A., 92120 Montrouge (FR)
(72) Inventeur: Mani, Christophe, 84300 Cavaillon (FR)
(74) Mandataire: Marchand, André

(56) Documents cités:
- EP-A- 1 017 005
- EP-A- 1 197 909
- WO-A-99/67737

## Description

La présente invention concerne les techniques de transmission de données sans contact, notamment par induction électromagnétique, appliquées aux étiquettes électroniques sans contact, aux cartes à puce sans contact... et autres objets électroniques portatifs sans contact de type équivalent.

La présente invention concerne plus particulièrement un procédé anticollision pour l'identification par un terminal de modules électroniques sans contact.

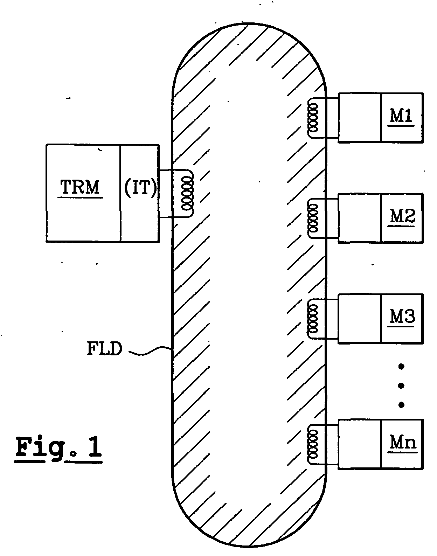

Dans les applications sans contact du type susmentionné, il est fréquent que plusieurs modules se trouvent au même instant dans le champ d'interrogation d'un terminal. Une telle situation est représentée en figure 1, où l'on voit un terminal TRM en présence de plusieurs modules M1, M2, M3... Mn agencés ici pour communiquer avec le terminal par couplage inductif. Le terminal TRM est équipé d'une interface de communication IT comportant une bobine d'antenne lui permettant d'émettre un champ magnétique FLD, d'envoyer des données aux modules, généralement par modulation de l'amplitude du champ magnétique, et de recevoir des données émises par les modules. Les modules M1 à Mn sont équipés d'interfaces de communication IM comportant chacune une bobine d'antenne, leur permettant d'envoyer des données au terminal, généralement par modulation de charge (affaiblissement du champ magnétique par court-circuit des bobines d'antenne) et de recevoir les données émises par le terminal.

Dans la situation illustrée en figure 1, le terminal doit établir une communication avec chacun des modules afin de réaliser une opération prévue par l'application, par exemple une transaction monétaire, une opération d'identification et d'authentification en vue de délivrer une autorisation de passage (contrôle d'accès), une opération de péage ou tout simplement une identification sans authentification des modules présents (inventaire). La communication avec un module ne peut qu'être individuelle et ne doit pas être perturbée par des messages émis par d'autres modules. Dans le cas contraire, il se produit une collision de messages qui se traduit au niveau du terminal par la réception de messages entachés d'erreur.

En règle générale, le terminal ne connaît pas l'identité des modules présents dans son champ d'interrogation. Cela signifie qu'il n'est pas envisageable que le terminal envoie à un module déterminé un message particulier qui permettrait de rendre actif ce module tout en maintenant les autres silencieux.

Ce problème est résolu grâce aux procédés anticollision, qui nécessitent tout d'abord que les modules possèdent chacun un numéro d'identification qui leur est propre afin de pouvoir être différentiés les uns des autres par le terminal.

Parmi les procédés anticollision connus, on distingue les procédés déterministes et les procédés probabilistes.

Selon les procédés déterministes, le terminal envoi des messages de marquage délimitant des positions de réponse ("time slots") sur une échelle temporelle de réponse comprenant 2^{N} positions de réponse. Chaque module envoie un message d'identification comprenant son numéro d'identification, lorsqu'une position de réponse correspondant aux N premiers bits de son numéro d'identification est atteinte. Lorsqu'un module est le seul à répondre sur une position de réponse, le terminal l'identifie et peut le sélectionner. Si deux modules répondent sur la même position de réponse, cela signifie que les N premiers bits de leur numéro d'identification sont identiques. Le terminal détecte la collision et envoie une demande d'identification complémentaire de type nominative, comprenant les N bits des numéros d'identification en collision. Cette demande d'identification complémentaire nominative ne concerne que les modules en collision sur la position de réponse définie par les N bits spécifiés. En réponse à la demande d'identification complémentaire nominative, les modules concernés élaborent une nouvelle position de réponse en utilisant cette fois les N bits suivants de leur numéro d'identification, et renvoient un nouveau message d'identification. Cette séquence peut se répéter plusieurs fois jusqu'à ce que tous les modules soient identifiés et/ou sélectionnés, et peut se répéter pour chaque position de réponse autant de fois que le nombre de sous-groupes de N bits restant à parcourir dans les numéros d'identification.

Le processus d'identification est arborescent car chaque étape d'identification complémentaire nominative ne concerne que les modules en collision sur une position de réponse déterminée. Ainsi, par exemple, si deux premiers modules présentent N premiers bits identiques et deux autres modules présentent N premiers bits identiques mais différents des N premiers bits des deux premiers modules, l'identification des quatre modules nécessitera au moins deux étapes d'identification complémentaires, l'une pour départager les deux premiers modules et l'autre pour départager les deux autres modules.

En pratique, l'arborescence des procédés déterministes peut devenir très complexe lorsque le nombre de modules augmente et l'identification de chaque module nécessite un temps de traitement assez long.

Les procédés anticollision impliquent également que les modules exécutent des algorithmes relativement complexes leur permettant de savoir s'ils doivent ou non répondre à une demande d'identification complémentaire nominative.

D'autre part, lorsque le nombre de modules augmente, le risque augmente que deux modules aient le même numéro d'identification, ce qui correspond à une collision totale et à l'impossibilité de départager deux modules. On doit alors augmenter la longueur des numéros d'identification pour diminuer ce risque. Outre la prévision de numéros d'identification d'une grande longueur, une autre mesure permettant de diminuer le risque d'une collision totale est que chaque module génère un numéro d'identification aléatoire avant une communication. Le numéro d'identification est ensuite utilisé par le module pour toutes les interrogations successives jusqu'à ce que le module soit mis hors tension ou soit désactivé. Toutefois, la génération de numéros d'identification aléatoires de grande longueur nécessite la prévision de générateurs de nombres aléatoires puissants et performants, d'une complexité et d'un prix de revient élevé et d'un encombrement non négligeable en termes de surface de silicium.

Un procédé anticollision déterministe est par exemple préconisé par la norme ISO 14443-3 type B, qui prévoit que les modules ont des numéros d'identification de 32 bits pouvant être aléatoires.

En résumé, les procédés déterministes prévoient une identification de modules de type arborescent, qui est complexe à mettre en oeuvre, peu rapide, et nécessite des générateurs de nombres aléatoires performants.

L'avantage de ces procédés est toutefois que, l'identification des modules étant de type arborescent, le choix d'un nombre important de positions de réponse n'est pas impératif. En choisissant par exemple un nombre N égal à 4 (soit quatre bits), on obtient 16 positions de réponse seulement.

Les procédés probabilistes se distinguent des procédés déterministes en ce que la position de réponse d'un module est indépendante de son numéro d'identification. Le terminal envoie tout d'abord une demande d'identification générale qui déclenche dans le module la génération d'un nombre aléatoire. Ce nombre aléatoire détermine la position de réponse du module pour l'envoi d'un message d'identification comprenant son numéro d'identification. L'efficacité des procédés probabilistes, lorsque le nombre de modules augmente, ne dépend pas de la longueur des numéros d'identification (bien que subsiste toujours la nécessité de ne pas avoir deux modules ayant le même numéro d'identification) mais de l'étalement de l'échelle de réponse. Ainsi, plus le nombre de positions de réponse est grand, plus le procédé probabiliste est efficace. En cas de collision, les modules non identifiés reçoivent une demande d'identification complémentaire non nominative et déterminent une nouvelle position de réponse aléatoire. L'étape d'identification complémentaire n'étant pas nominative, elle concerne des modules ayant été en collision sur des positions de réponse différentes, contrairement aux étapes d'identification nominatives des procédés déterministes.

En résumé, les procédés anticollision probabilistes sont plus simples à mettre en oeuvre en ce qui concerne les algorithmes embarqués dans les modules, mais nécessitent une échelle de réponse étendue pour être applicables à un nombre important de modules. En contrepartie, si l'échelle de réponse est étendue, le processus d'identification peut s'avérer inutilement long lorsqu'un nombre réduit de modules se trouve simultanément dans le champ d'interrogation du terminal. Considérons à titre d'exemple que 255 positions de réponse soient prévues et que deux modules seulement se trouvent dans le champ d'interrogation du terminal. Il est possible qu'un module choisisse aléatoirement la position N°1 tandis que l'autre module choisit la position de réponse N°255. Dans ce cas, après avoir identifié le premier module, il faut parcourir toute l'échelle de réponse et atteindre la 255e position de réponse pour identifier le deuxième module.

Encore un autre inconvénient des procédés probabilistes classiques est qu'une collision sur les numéros d'identification peut intervenir entre deux modules n'ayant pas répondus sur la même position de réponse.. Le terminal doit alors demander aux modules de générer de nouveaux numéros d'identification, et recommencer le processus d'identification.

Un tel procédé et un tel module sont décrits dans le document WO 99/67737.

Ainsi, la présente invention vise à prévoir un procédé anticollision qui ne présente pas les inconvénients des procédés connus. Ceci est réalisé par le procédé selon la revendication 1 et par le module selon la revendication 8.

A cet effet, l'idée générale de la présente invention est de prévoir une combinaison de moyens relevant à la fois des procédés déterministes et des procédés probabilistes. Selon l'invention, les demandes d'identification émises par le terminal ne sont pas nominatives, comme cela est le cas avec un procédé probabiliste, mais la position de réponse d'un module est fonction du numéro d'identification du module, comme dans un procédé déterministe. D'autre part, un module génère un nouveau numéro d'identification de façon aléatoire lorsqu'il doit répondre à une demande d'identification complémentaire, de sorte que sa position de réponse est aléatoire et n'est pas constante, comme dans un procédé probabiliste. Le processus d'identification n'est donc pas de type arborescent et est ainsi plus simple à mettre en oeuvre. De préférence, la position de réponse ne dépend que d'une partie du numéro d'identification, comme dans les procédés déterministes, de sorte que l'échelle de réponse peut comprendre un nombre réduit de positions de réponse si la partie du numéro d'identification servant à définir la position de réponse comprend un nombre de bits réduit.

Plus particulièrement, la présente invention prévoit un procédé anticollision pour l'identification et la sélection par un terminal de modules électroniques sans contact, dans lequel : avant une communication, un module génère un numéro d'identification aléatoire ; le terminal envoie une demande d'identification générale pour déclencher l'envoi de messages d'identification par les modules, et envoie une ou plusieurs demandes d'identification complémentaire non nominatives lorsque des messages d'identification se trouvent en collision ; un module est sélectionné lorsqu'il reçoit un message de sélection comprenant son numéro d'identification ; en réponse à une demande d'identification générale ou complémentaire, un module non sélectionné envoie un message d'identification comprenant son numéro d'identification, lorsqu'il atteint, sur une échelle de réponse, une position de réponse déterminée, procédé dans lequel : un module répond à une demande d'identification générale ou complémentaire sur une position de réponse qui est fonction de son numéro d'identification, et un module non sélectionné génère un nouveau numéro d'identification aléatoire lorsqu'il reçoit une demande d'identification complémentaire, de sorte que la position de réponse d'un module non sélectionné en réponse à une demande d'identification complémentaire n'est statistiquement pas la même que sa position de réponse en réponse à une précédente demande d'identification, tout en étant fonction de son numéro d'identification.

Selon un mode de réalisation, une demande d'identification générale est identique en format et en code à une demande d'identification complémentaire.

Selon un mode de réalisation, un module détermine une position de réponse qui est égale à une partie déterminée de son numéro d'identification, la partie déterminée comprenant des bits de rang déterminé dont le rang ne varie pas lorsque le module répond à des demandes d'identification successives.

Selon un mode de réalisation, la partie déterminée du numéro d'identification d'un module comprend des bits de poids faible du numéro d'identification.

Selon un mode de réalisation, pour générer un nouveau numéro d'identification aléatoire, un module conserve une première partie de son numéro d'identification actuel, et génère de façon aléatoire une deuxième partie du numéro d'identification.

Selon un mode de réalisation, un module détermine une position de réponse qui est égale à la deuxième partie du numéro d'identification.

Selon un mode de réalisation, la première partie du numéro d'identification d'un module est générée de façon aléatoire par le module avant une communication.

Selon un mode de réalisation, la première partie du numéro d'identification d'un module est une donnée fixe enregistrée dans le module.

Selon un mode de réalisation, le terminal envoie également une demande d'identification complémentaire lorsqu'il reçoit, en réponse à une précédente demande d'identification complémentaire, un message d'identification d'un module qui n'est pas en collision avec un autre message d'identification mais qui comprend un numéro d'identification déjà utilisé par un autre module.

Selon un mode de réalisation, un module est automatiquement activé lorsqu'il se trouve en présence d'un champ magnétique émis par le terminal, et génère un numéro d'identification aléatoire lorsqu'il est activé.

Selon un mode de réalisation, les positions de réponse sur l'échelle de réponse sont repérées par des messages de marquage envoyés par le terminal.

Selon un mode de réalisation, une demande d'identification générale forme une commande de marquage de la première position de réponse sur l'échelle de réponse.

Selon un mode de réalisation, une commande de marquage comprend un numéro de position de réponse, au moins pour des positions de réponse supérieures à une première position de réponse.

Selon un mode de réalisation, le terminal envoie des messages de marquage dans un ordre ne correspondant pas à un rang croissant des positions de réponse.

Selon un mode de réalisation, le terminal n'envoie une demande d'identification complémentaire qu'après que toutes les positions de réponse de l'échelle de réponse ont été parcourues.

Selon un mode de réalisation, pour initier une communication, le terminal envoie tout d'abord une demande d'identification immédiate auquel les modules répondent immédiatement, sans échelle de réponse.

Selon un mode de réalisation, un module comprend un état sélectionné ainsi qu'un état désélectionné ou désactivé dans lequel le terminal peut le faire basculer après l'avoir sélectionné, et dans lequel un module dans l'état sélectionné ou dans l'état désélectionné ou désactivé ne répond pas à une demande d'identification générale ou complémentaire.

La présente invention concerne également un module électronique sans contact, comprenant des moyens pour émettre et recevoir des messages sans contact, des moyens de décodage de messages reçus agencés pour décoder au moins une demande d'identification générale, une demande d'identification complémentaire non nominative et un message de sélection, des moyens pour basculer dans un état sélectionné sur réception d'un message de sélection comprenant un numéro d'identification du module, le module étant agencé pour : générer un numéro d'identification aléatoire avant une communication ; sur réception d'une demande d'identification générale ou complémentaire, déterminer, si le module n'est pas dans l'état sélectionné, une position de réponse sur une échelle de réponse puis envoyer, lorsque la position de réponse est atteinte, un message d'identification comprenant le numéro d'identification du module, et en réponse à une demande d'identification générale ou complémentaire, déterminer une position de réponse qui est fonction de son numéro d'identification, et générer un nouveau numéro d'identification aléatoire lorsqu'il reçoit une demande d'identification complémentaire, de sorte que la position de réponse du module en réponse à une demande d'identification complémentaire n'est statistiquement pas la même que sa position de réponse en réponse à une précédente demande d'identification, tout en étant fonction de son numéro d'identification.

Selon un mode de réalisation, le module est agencé pour décoder une demande d'identification complémentaire identique en format et en code à une demande d'identification générale.

Selon un mode de réalisation, le module est agencé pour déterminer une position de réponse qui est égale à une partie déterminée de son numéro d'identification, la partie déterminée comprenant des bits de rang déterminé dont le rang ne varie pas lorsque le module répond à des demandes d'identification successives.

Selon un mode de réalisation, la partie déterminée comprend des bits de poids faible du numéro d'identification du module.

Selon un mode de réalisation, le module est agencé pour générer un nouveau numéro d'identification en conservant une première partie de son numéro d'identification actuel, et en générant de façon aléatoire une deuxième partie du numéro d'identification.

Selon un mode de réalisation, le module est agencé pour déterminer une position de réponse égale à la deuxième partie du numéro d'identification, en réponse à une demande d'identification générale ou complémentaire.

Selon un mode de réalisation, la première partie du numéro d'identification d'un module est une donnée fixe enregistrée dans le module.

Selon un mode de réalisation, la première partie du numéro d'identification d'un module est générée de façon aléatoire par le module avant une communication.

Selon un mode de réalisation, le module est agencé pour déterminer une position de réponse qui est égale à la deuxième partie du numéro d'identification.

Selon un mode de réalisation, le module est agencé pour basculer automatiquement dans un état activé lorsqu'il se trouve en présence d'un champ magnétique d'une fréquence déterminée, et générer un numéro d'identification lorsqu'il bascule dans l'état activé.

Selon un mode de réalisation, le module est agencé pour décoder des messages de marquage envoyés par le terminal, permettant au module de délimiter des positions de réponse sur l'échelle de réponse.

Selon un mode de réalisation, le module est agencé pour décoder des messages de marquage comprenant un numéro de position de réponse, au moins pour des positions de réponse supérieures à une première position de réponse.

Selon un mode de réalisation, le module est agencé pour décoder une demande d'identification générale en tant que commande de marquage d'une première position de réponse sur l'échelle de réponse.

Selon un mode de réalisation, le module est agencé pour décoder une demande d'identification immédiate et pour envoyer immédiatement, sans échelle de réponse, en réponse à une demande d'identification immédiate, un message d'identification.

Selon un mode de réalisation, le module comprend un état désélectionné ou désactivé dans lequel il peut basculer après avoir été dans l'état sélectionné, le module étant agencé pour ne pas répondre à une demande d'identification générale ou complémentaire lorsqu'il se trouve dans l'état désélectionné ou de désactivation.

Ces objets, caractéristiques et avantages ainsi que d'autres de la présente invention seront exposés plus en détail dans la description suivante d'un exemple non limitatif de mise en oeuvre du procédé anticollision selon l'invention, et d'un exemple non limitatif de réalisation d'un module agencé pour mettre en oeuvre le procédé selon l'invention, faite à titre non limitatif en relation avec les figures jointes parmi lesquelles :
- la figure 1 précédemment décrite représente plusieurs modules sans contact présents simultanément dans le champ d'interrogation d'un terminal,
- la figure 2 est un schéma bloc d'un module agencé pour mettre en oeuvre le procédé anticollision selon l'invention,
- la figure 3 est un diagramme d'états illustrant le fonctionnement du module de la figure 2,
- la figure 4 est un organigramme illustrant le fonctionnement du module de la figure 2 lorsque celui-ci se trouve dans un état déterminé parmi les divers états représenté en figure 3,
- les figures 5A à 5D illustrent une séquence anticollision selon l'invention, comprenant plusieurs sous-séquences.

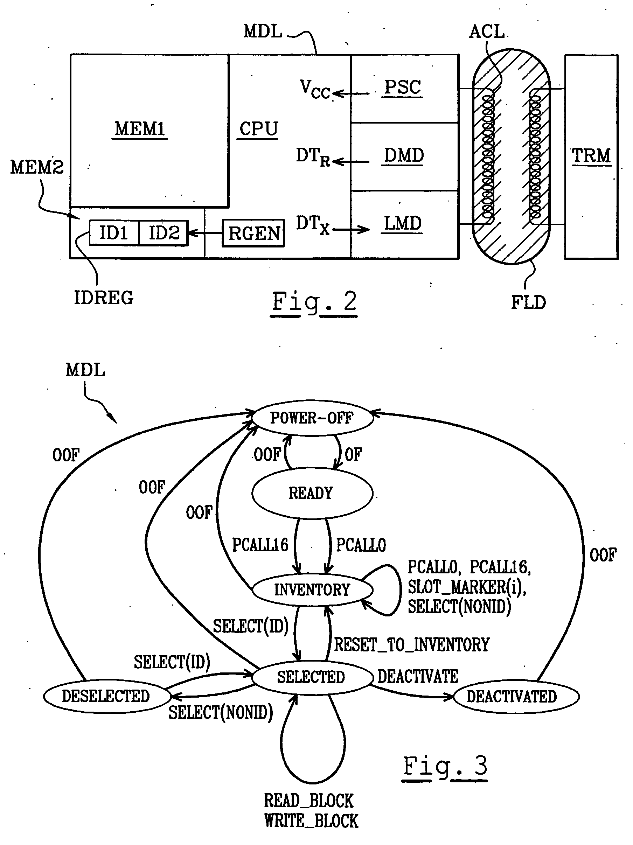

La figure 2 est le schéma bloc d'un module sans contact MDL prévu pour mettre en oeuvre le procédé anticollision selon l'invention. Le module présente une architecture générale en soi classique et comprend ainsi une unité centrale CPU, une zone mémoire MEM1 de type non volatile (par exemple EPROM ou EEPROM), une mémoire MEM2 volatile (RAM) et une interface de communication équipée d'une bobine d'antenne ACL. Lorsque le module est plongé dans un champ magnétique alternatif FLD émis par un terminal TRM, une tension alternative Vi apparaît aux bornes de la bobine d'antenne, la tension Vi oscillant à la fréquence porteuse du champ magnétique.

La zone mémoire MEM1 comprend par exemple 128 blocs de 32 bits chacun. La zone mémoire MEM2 comprend divers registres classiques utilisés par le CPU, non représentés en figure 2 à l'exception d'un registre IDREG. Ce registre IDREG contient un numéro d'identification du module, ou numéro ID, comprenant ici deux parties ID1, ID2. La partie ID1 comprend par exemple les bits de poids fort du numéro ID et la partie ID2 les bits de poids faible. Dans ce qui suit, on considérera à titre d'exemple non limitatif que les parties ID1, ID2 comprennent chacune quatre bits. Les exemples de numéros ID décrits dans ce qui suit seront exprimés en notation hexadécimale, les numéros ID pouvant aller de 00 (8 bits à 0) à FF (8 bits à 1, soit 256 en base 10).

Selon l'invention, le registre IDREG est relié à la sortie d'un générateur RGEN de nombre aléatoire, ici un générateur de 4 bits simple à implémenter et occupant une faible surface de silicium. Le générateur RGEN est utilisé par l'unité centrale pour générer, avant une communication, les parties ID1, ID2 d'un numéro ID aléatoire. Le numéro ID est généré ici lorsque le module est activé par le champ magnétique FLD et bascule dans un état READY décrit plus loin. D'autre part l'unité CPU utilise le générateur RGEN pour générer une nouvelle partie ID2 quand elle doit répondre à une demande d'identification générale ou complémentaire correspondant à une commande PCALL16 décrite plus loin. Selon l'invention toujours, l'unité centrale, en réponse à une telle demande d'identification, choisit une position de réponse qui est égale à la partie ID2 du numéro ID.

L'interface de communication du module comprend un circuit d'alimentation PSC, un démodulateur DMD, et un modulateur LMD. Le circuit PSC délivre une tension Vcc d'alimentation du module, obtenue par redressement de la tension induite Vi. Le démodulateur DMD extrait de la tension induite Vi des données DTx envoyées par le terminal. Ces données sont généralement envoyées par modulation de l'amplitude du champ magnétique, et sont par exemple codées ASK (modulation par saut d'amplitude, ou "Amplitude Shift Keying Modulation"). Le modulateur LMD est prévu pour émettre des données DTx selon le principe de la modulation de charge de la bobine d'antenne. Les données DTx sont par exemple codées BPSK (Modulation par saut de phase, ou Phase Shift Keying Modulation) au moyen d'une sous-porteuse extraite de la porteuse du champ magnétique. La porteuse est par exemple de 13,56 MHz et la sous-porteuse de 847 KHz. Le débit de données obtenu est dans ce cas de l'ordre de 100 Kbits/s. L'unité CPU peut être du type à microprocesseur ou à logique câblée (séquenceur), et assure le décodage et le traitement des messages (commandes) envoyés par le terminal, et l'envoi de messages (réponses) au terminal, ainsi que l'exécution d'étapes ou d'instructions spécifiques au procédé anticollision selon l'invention.

La figure 3 est un diagramme d'état illustrant le fonctionnement du module MDL. On distingue six états désignés respectivement POWER-OFF, READY, INVENTORY, SELECTED, DEACTIVATED et DESELECTED, et des commandes envoyées par le terminal, PCALL0, PCALL16, SLOT-MARKER(i), SELECT(ID), SELECT(NONID), DESACTIVATE, READ-BLOCK, WRITE-BLOCK.

Ces commandes, ainsi que des réponses correspondantes R(ID) et R-READ-BLOCK émises par le module, sont décrites plus en détail dans les dernières pages de la présente description, auxquelles on pourra se reporter avant de lire ce qui suit.

Des transitions entre les divers états du module sont également déterminés par des événements désignés OF et OOF.

L'événement OF ("on field") correspond au cas où le module entre dans le périmètre d'induction du champ magnétique FLD. Le module passe alors de l'état POWER-OFF à l'état READY car le circuit PSC délivre la tension Vcc lorsque la tension alternative Vi apparaît aux bornes de sa bobine d'antenne.

L'événement OOF ("out of field") correspond au cas où le module sort du périmètre d'induction du champ magnétique émis par le terminal. Le module, s'il est actif et se trouve dans l'un des états READY, INVENTORY, SELECTED, DESELECTED ou DEACTIVATED, n'est plus alimenté électriquement par le circuit PSC en raison de la disparition (ou de la valeur insuffisante) de la tension induite Vi. Le module retourne alors dans l'état POWER-OFF.

### Etat READY

Lorsque le module bascule dans l'état READY, il génère un numéro ID aléatoire et attend une commande PCALL0 ou PCALL16 pour basculer dans l'état INVENTORY. Il sera noté ici que la commande PCALL0 est optionnelle dans le cadre de la présente invention car elle n'est pas une commande anticollision, tous les modules étant tenus de s'identifier simultanément. Cette commande est prévue pour éviter le déclenchement du processus anticollision quand un seul module est présent. Ainsi, dans une variante, le passage de l'état READY à l'état INVENTORY peut être lié à la réception de la commande PCALL16 uniquement. Inversement, il peut être prévu que le passage de l'état READY à l'état INVENTORY soit exclusivement lié à la réception de la commande PCALL0. Dans ce cas, en cas de collision, le processus anticollision n'est déclenché qu'à partir de l'état INVENTORY.

### ETAT INVENTORY

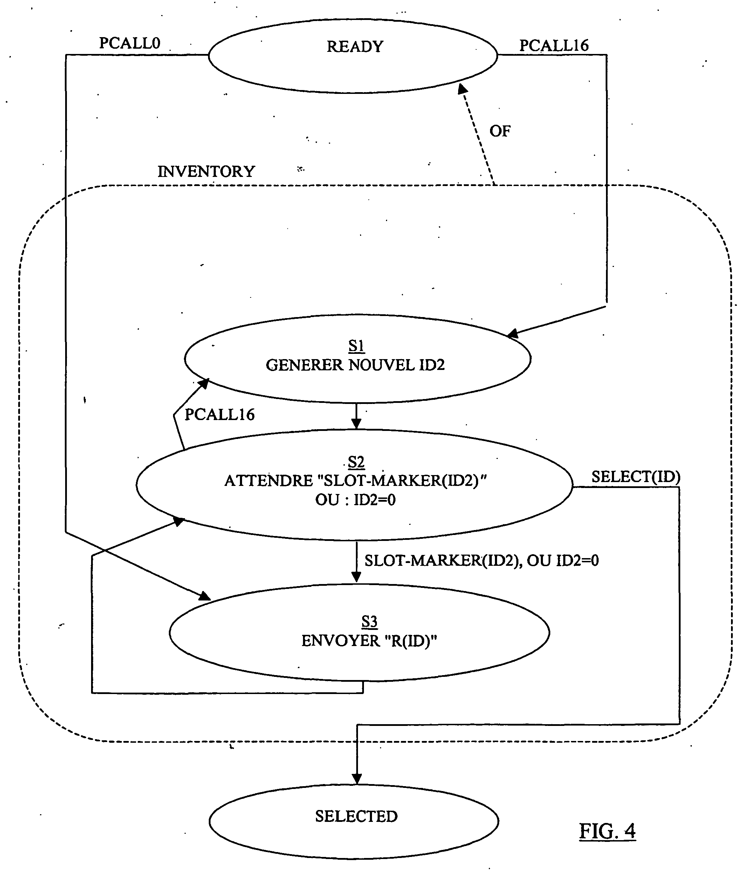

Lorsque le module bascule dans l'état INVENTORY, il exécute un certain nombre d'actions représentées sur l'organigramme de la figure 4. Si le passage à l'état INVENTORY est déclenché par la réception d'une commande PCALL0, le module va directement à une étape S3 où il envoie un message d'identification prenant ici la forme d'une réponse R(ID) comprenant son numéro ID. Après l'étape S3, le module va à une étape S2. Si le passage à l'état INVENTORY est déclenché par la réception d'une commande PCALL16, le module va directement à une étape S1 où il génère une nouvelle partie ID2 de son numéro ID au moyen du générateur aléatoire RGEN. Le module va ensuite à l'étape S2.

A l'étape S2, le module attend une commande de marquage SLOT-MARKER(i) avec i=ID2, soit la commande SLOT-MARKER(ID2) qui marque la position de réponse correspondant à la partie ID2 du numéro ID du module. Lorsque la commande SLOT-MARKER(ID2) est reçue, le module va à l'étape S3 où il envoie une réponse R(ID) et retourne ensuite à l'étape S2.

Dans le présent mode de réalisation où la commande PCALL16 forme une commande de marquage de la première position de réponse, le module passe directement de l'étape S2 à l'étape S3 si la partie ID2 de son numéro ID est égale à 0, car la partie ID2 correspond alors à la première position de réponse.

L'étape S2 est également une étape d'attente de sélection dans laquelle le module reste (ou revient) jusqu'à ce qu'une commande SELECT(ID) comprenant son numéro ID soit reçue. Lorsque cette commande est reçue, le module bascule dans l'état SELECTED.

Le module peut également recevoir une nouvelle commande PCALL16 lorsqu'il se trouve à l'étape S2. Dans ce cas le module retourne à l'étape S1 pour générer une nouvelle partie ID2 de son numéro ID puis revient à l'étape S2.

### Etat SELECTED

Une fois dans l'état SELECTED, le module ne répond plus à des demandes d'identification immédiate PCALL0 ou à des demandes d'identification générale ou complémentaire PCALL16. La zone mémoire MEM1 du module peut être lue ou écrite par le terminal au moyen des commandes READ-BLOCK ou WRITE-BLOCK. En réponse à la commande READ-BLOCK, le terminal reçoit une réponse R-READ-BLOCK. Si le module reçoit une commande SELECT(NONID), c'est-à-dire une commande SELECT(ID) comprenant un numéro ID qui n'est pas le sien, le module bascule dans l'état DESELECTED. Si le module reçoit une commande DESACTIVATE, il bascule dans l'état DEACTIVATED.

### Etat DESELECTED

Le module dans l'état DESELECTED ne répond à aucune commande hormis une commande SELECT(ID) comprenant son numéro ID, qui le fait revenir à l'état SELECTED. La disparition du champ magnétique (événement OOF) le fait revenir à l'état POWER-OFF.

### Etat DEACTIVATED

Le module dans l'état DEACTIVATED ne répond à aucune commande. Seule la disparition du champ magnétique (événement OOF) le fait revenir à l'état POWER-OFF.

### Exemple de séquence anticollision

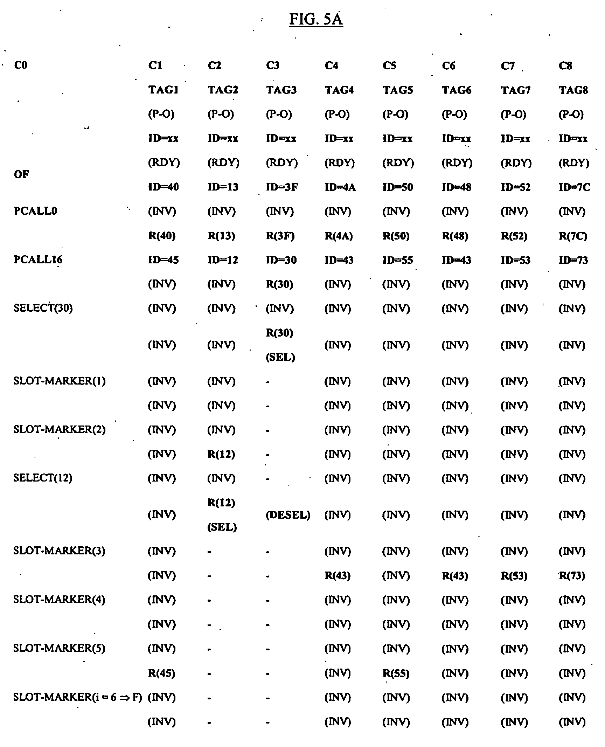

Un exemple de séquence anticollision selon l'invention est représenté sur les figures 5A à 5D. On suppose ici que huit modules selon l'invention, désignés respectivement TAG1 à TAG8, entrent simultanément dans le champ d'interrogation du terminal. La colonne C0 décrit les commandes envoyées par le terminal. Les colonnes C1 à C8 décrivent les réponses envoyées par les modules, les numéros- ID générés par les modules et les états dans lesquels se trouvent les modules. L'état POWER-OFF est désigné "P-O", l'état READY est désigné "RDY", l'état INVENTORY est désigné "INV", l'état SELECTED est désigné "SEL". L'état DESELECTED est désigné "DESEL".

Le début de la séquence est décrit par la figure 5A. Tous les modules sont dans l'état POWER-OFF et comprennent dans leurs registres IDREG respectifs des numéros d'identification non spécifiés ("xx"). Lorsque le champ magnétique apparaît (événement OF) les modules basculent dans l'état READY et génèrent chacun un numéro d'identification, respectivement 40, 13, 3F, 4A, 50, 48, 52, 7C dans cet exemple. Le terminal envoie une demande d'identification immédiate PCALL0 dans l'hypothèse où un seul module se trouverait dans son champs d'interrogation. Les modules basculent dans l'état INVENTORY et répondent simultanément par des messages R(ID) comprenant leurs numéros ID, soit R(40), R(13), R(3F), R(4A), R(50), R(48), R(52), R(7C) respectivement. Les réponses sont toutes en collision et ne peuvent être lues par le terminal. Ce dernier envoie alors une demande d'identification générale PCALL16. Chaque module calcule une nouvelle partie ID2 de son numéro ID en conservant la partie ID1. Les numéros ID des modules deviennent respectivement, dans cet exemple : 45, 12, 30, 43, 55, 43, 53, 73.

La commande PCALL16 formant par convention une commande de marquage de la première position de réponse, le module TAG3 répond à la commande PCALL16 en envoyant un message R(30) car la partie ID2 de son numéro d'identification est égale à 0 et correspond à la première position de réponse. La réponse du module n'étant pas en collision avec une autre réponse, le terminal peut la lire et renvoie une commande de sélection SELECT(30) à laquelle le module répond en envoyant à nouveau le message R(ID). Puis le module bascule dans l'état SELECTED. Le terminal envoie ensuite la commande SLOT-MARKER(1) à laquelle aucun module ne répond, puis la commande SLOT-MARKER(2) à laquelle le module TAG2 répond en s'identifiant puisque la partie ID2 de son numéro ID est égal à 2. La sélection du module TAG2 se fait selon la procédure déjà décrite, et a pour effet que le module précédemment sélectionné TAG3 bascule automatiquement dans l'état DESELECTED (Cf. figure 3, commande SELECT(NONID)). Le terminal continue ensuite d'envoyer des commandes SLOT-MARKER(i) pour i allant de 3 à F. Lorsque la commande SLOT-MARKER(3) est émise, les modules TAG4, TAG6, TAG7, TAG8 répondent simultanément et ne peuvent donc pas être sélectionnés. Les modules TAG1 et TAG5 répondent simultanément à la commande SLOT-MARKER(4) et ne sont également pas sélectionnés. Aucun module ne répond sur les positions de réponse suivantes allant de 6 à F.

Ainsi, au terme de cette première sous-séquence anticollision, seuls les modules TAG2 et TAG3 ont été sélectionnés, le module TAG3 étant dans l'état DESELECTED et le module TAG2 dans l'état SELECTED.

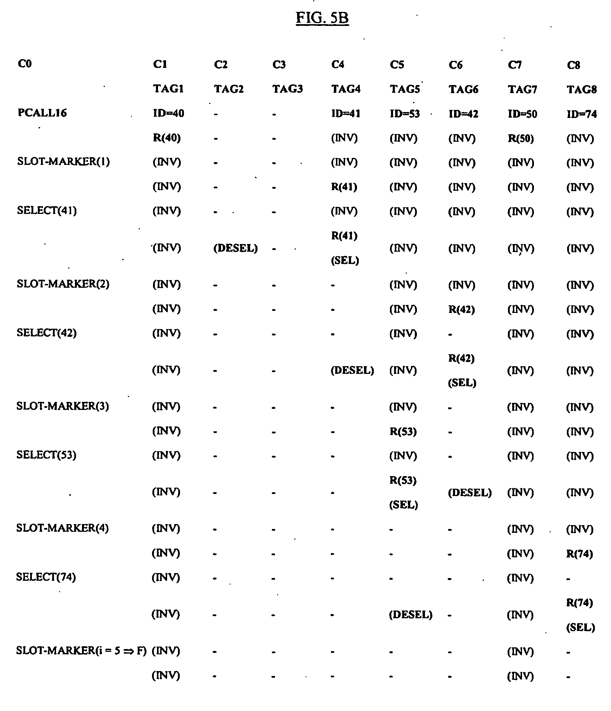

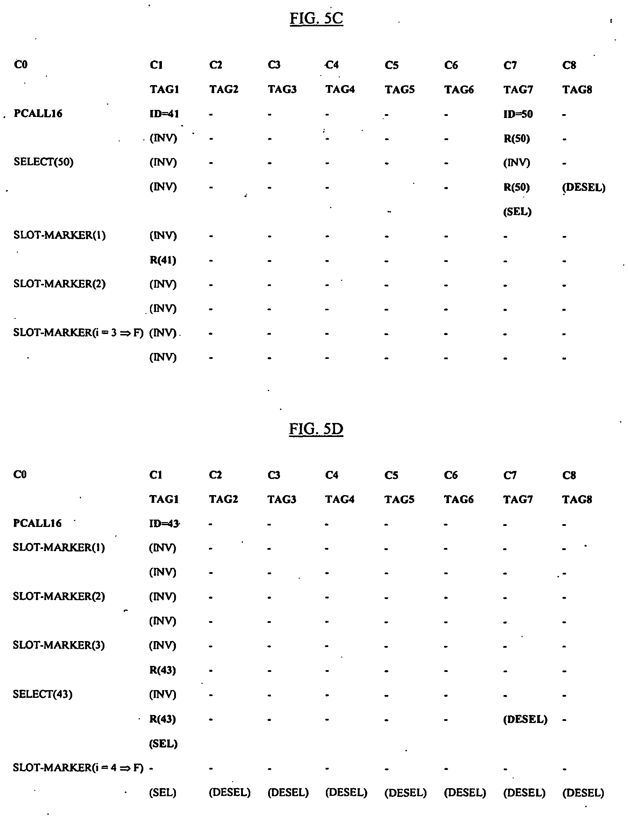

Une nouvelle sous-séquence anticollision, illustrée en figure 5B, est déclenchée par l'envoi de la commande PCALL16, qui constitue une demande d'identification complémentaire pour les modules encore en attente de sélection. Ceux-ci génèrent alors une nouvelle partie ID2 de leurs numéros ID qui deviennent respectivement, dans cet exemple : 40 (TAG1), 41 (TAG4), 53 (TAG5), 42 (TAG6), 50 (TAG7) et 74(TAG8). Les modules TAG1 et TAG7 répondent simultanément sur la première position de réponse et ne peuvent pas être sélectionnés. Le module TAG4 est sélectionné sur la deuxième position de réponse repérée par la commande SLOT-MARKER(1) et le module TAG6 est sélectionné sur la troisième position de réponse repérée par la commande SLOT-MARKER(2). Le module TAG5 est sélectionné sur la quatrième position de réponse repérée par la commande SLOT-MARKER(3). Le module TAG8 est sélectionné sur la cinquième position de réponse repérée par la commande SLOT-MARKER(4). Aucun module ne répond sur les positions de réponse suivantes, pour i allant de 5 à F.

Ainsi, à la fin de cette seconde sous-séquence anticollision, tous les modules sauf TAG1 et TAG7 ont été sélectionnés, et tous ont basculé dans l'état DESELECTED sauf le module TAG8 qui est dans l'état SELECTED.

Une troisième sous-séquence anticollision, illustrée en figure 5C, est déclenchée par l'envoi de la commande PCALL16. Le module TAG1 génère un numéro ID égal à 41 et le module TAG7 génère un numéro ID égal à 50, les parties ID1 étant conservées, comme précédemment. Le module TAG7 est sélectionné sur la première position de réponse marquée par la commande PCALL16. Le module TAG1 étant seul à n'être pas sélectionné, il est le seul à répondre sur la deuxième position de réponse, marquée par la commande SLOT-MARKER(1), et envoie le message R(41). Toutefois le terminal ne le sélectionne pas car son numéro ID=41 a déjà été choisi par un autre module, à savoir le module TAG4 qui a été sélectionné au cours de la seconde sous-séquence anti-collision (fig. 5B). Ainsi, le terminal n'envoie pas la commande SELECT(41) et continue à marquer les positions de réponse suivantes jusqu'à ce que i soit égal à F, au cas où d'autres modules seraient entrés dans son champ d'interrogation.

Une quatrième sous-séquence anticollision, illustrée en figure 5D, est déclenchée par l'envoi de la commande PCALL16. Le module TAG1 choisi cette fois un numéro ID égal à 43 qui n'est utilisé par aucun autre module. Le module TAG1 est donc sélectionné sur la quatrième position de réponse, repérée par la commande SLOT-MARKER(3). Le terminal continue à marquer les positions de réponse suivantes, au cas où d'autres modules se trouveraient dans son champ d'interrogation.

La séquence anticollision qui vient d'être décrite est bien entendu susceptible de diverses variantes, selon l'application envisagée.

Ainsi, par exemple, lorsque le module TAG3 est sélectionné au cours de la première sous-séquence (fig. 5A), le terminal peut arrêter d'envoyer des commandes de marquage des positions de réponse suivantes, et établir une communication avec le module TAG3 pour lire ou écrire des données, puis faire basculer le module dans l'état DEACTIVATED.

Le terminal peut également, après avoir dialogué avec le module TAG3, le laisser dans l'état SELECTED et continuer la séquence anticollision. Dans ce cas, lorsque le terminal envoie la commande SELECT(12) pour sélectionner le module TAG2, le module TAG3 bascule automatiquement dans l'état DESELECTED car cette commande est pour lui une commande SELECT(NONID). La différence avec l'état DEACTIVATED est que le terminal converse la possibilité de sélectionner le module TAG3 ultérieurement en lui envoyant la commande SELECT(30).

Selon encore une autre variante de réalisation, le terminal peut également envoyer les commandes de marquage dans le désordre ou dans un ordre qu'il détermine. Les commandes de marquage étant sous son contrôle, rien n'oblige le terminal à marquer les positions de réponse par ordre croissant.

Egalement, bien que la demande d'identification générale ou complémentaire PCALL16 ait été utilisée dans ce qui précède comme repère de la première position de réponse, une commande spécifique SLOT-MARKER(0) pourrait également être prévue.

Egalement, la première partie ID1 du numéro ID d'un module peut n'être pas aléatoire et être enregistrée dans la zone mémoire MEM1.

La partie ID1 peut être également d'une longueur supérieure à la partie ID2 qui sert à la détermination des positions de réponse.

Inversement, la détermination des positions de réponse peut être faite à partir du numéro ID complet. Dans ce cas, la génération d'un nouveau numéro ID en réponse à la commande PCALL16 peut porter sur tout le numéro ID, ou seulement une partie du numéro ID.

Bien que la présente invention ait été décrite dans ce qui précède dans le cadre de la réalisation de modules sans contact de type inductif, il va de soi que le procédé selon l'invention est applicable à divers autres types de modules sans contact, notamment les modules sans contact prévus pour dialoguer dans la bande UHF avec un terminal émettant un champ électrique au lieu d'un champ magnétique.

### Principales commandes envoyées par le terminal et principales réponses renvoyées par les modules

### Définitions, abréviations :

- commande : message émis par le terminal,
- réponse : message émis par un module.
- SOF : champ de début de trame ("start of frame"),
- EOF : champ de fin de trame ("end of frame"),
- CODE(COMMANDE) : code d'une commande ou d'une réponse, sur 4, 8 ou 16 bits, présent dans un champ de la commande ou de la réponse,
- CRC1 et CRCh : bits de poids fort et de poids faible d'une signature de type CRC accompagnant les commandes ou les réponses, permettant au destinataire de détecter des erreurs de transmission, et permettant notamment au terminal de détecter des collisions entre réponses R(ID).

### Commandes :

### Commande PCALL0

Description : demande d'identification immédiate non nominative.

Modules exécutant la commande : modules dans l'état READY ou INVENTORY (soit modules non sélectionnés).

Réponse à la commande : les modules envoient chacun immédiatement un message d'identification R(ID).

Effet de la commande sur l'état d'un module : un module dans l'état READY bascule dans l'état INVENTORY ; un module dans l'état INVENTORY reste dans l'état INVENTORY.

| Exemple de format : | | | | | |
|---|---|---|---|---|---|
| SOF | CODE (PCALL0) | | CRCl | CRCh | EOF |
| | 8 bits | 8 bits | 8 bits | 8 bits | |

### Commande PCALL16

Description : demande d'identification générale de type non nominative ou demande d'identification complémentaire de type non nominative, formant également, optionnellement, une commande de marquage de la première position de réponse (i=0).

Modules exécutant la commande : modules dans l'état READY ou INVENTORY (soit modules non sélectionnés).

Réponse à la commande : si la commande PCALL16 est utilisée comme commande de marquage de la première position de réponse, les modules ayant un numéro ID=0 renvoient un message d'identification R(ID).

Effet de la commande sur l'état d'un module : un module dans l'état READY bascule dans l'état INVENTORY ; un module dans l'état INVENTORY reste dans l'état INVENTORY.

| Exemple de format : | | | | | |
|---|---|---|---|---|---|
| SOF | CODE (PCALL16) | | CRCl | CRCh | EOF |
| | 8 bits | 8 bits | 8 bits | 8 bits | |

### Commande SLOT-MARKER(i)

Description : commande de marquage d'une position de réponse de rang i avec "i" spécifié dans la commande, et i > 0 (pour i = 0, voir commande PCALL16).

Modules exécutant la commande : modules dans l'état INVENTORY.

Réponse à la commande : un module envoie un message d'identification R(ID) si le rang "i" est égal à la partie ID2 du numéro ID du module.

Effet de la commande sur l'état d'un module : aucun, un module dans l'état INVENTORY reste dans l'état INVENTORY tant qu'il ne reçoit pas de commande de sélection SELECT(ID) comprenant son numéro ID.

| Exemple de format : | | | | | |
|---|---|---|---|---|---|
| SOF | i | CODE (SLOT-MARKER) | CRCl | CRCh | EOF |
| | N bits | 4 bits | 8 bits | 8 bits | |

### Commande SELECT(ID)

Description : commande de sélection du module dont le code ID est spécifié dans la commande (commande nominative).

Modules exécutant la commande : modules dans l'état INVENTORY ou DESELECTED.

Réponse à la commande : le module visé par le numéro ID envoie un message d'identification R(ID) à titre de confirmation.

Effet de la commande sur l'état d'un module : un module dans l'état INVENTORY bascule dans l'état SELECTED ; un module dans l'état DESELECTED retourne dans l'état SELECTED.

| Exemple de format : | | | | | |
|---|---|---|---|---|---|
| SOF | CODE (SELECT) | ID | CRC1 | CRCh | EOF |
| | 8 bits | 8 bits | 8 bits | 8 bits | |

### Commande SELECT(NONID)

Description : commande de sélection reçue (commande SELECT(ID)) comprenant un code ID ne correspondant pas à celui du module.

Modules réagissant à la commande : modules dans l'état SELECTED.

Réponse à la commande : aucune.

Effet de la commande sur l'état d'un module : un module dans l'état SELECTED bascule dans l'état DESELECTED.

### Commande DESACTIVATE

Description : commande de désactivation d'un module se trouvant dans l'état SELECTED (commande non nominative).

Modules exécutant la commande : modules dans l'état SELECTED.

Réponse à la commande : aucune.

Effet de la commande sur l'état d'un module : un module dans l'état SELECTED bascule dans l'état DEACTIVATED.

| Exemple de format : | | | | |
|---|---|---|---|---|
| SOF | CODE (DESACTIVATE) | CRCl | CRCh | EOF |
| | 8 bits | 8 bits | 8 bits | |

### Commande RESET-TO-INVENTORY

Description : commande de retour à l'état INVENTORY destinée à un module se trouvant dans l'état SELECTED (commande non nominative).

Modules exécutant la commande modules dans l'état SELECTED.

Réponse à la commande : aucune.

Effet de la commande sur l'état d'un module : un module dans l'état SELECTED retourne dans l'état INVENTORY.

| Exemple de format : | | | | |
|---|---|---|---|---|
| SOF | CODE (RESET-TO-INVENTORY) | CRCl | CRCh | EOF |
| | 8 bits | 8 bits | 8 bits | |

### Commande READ-BLOCK

Description : commande de lecture d'un bloc de N bits dans la zone mémoire MEM1, à une adresse spécifiée dans la commande (champ ADRESSE).

Modules exécutant la commande : modules dans l'état SELECTED.

Réponse à la commande : réponse R-READ-BLOCK (voir plus loin).

Effet de la commande sur l'état d'un module : aucun.

| Exemple de format : | | | | | |
|---|---|---|---|---|---|
| SOF | CODE (READ-BLOCK) | ADRESSE | CRCl | CRCh | EOF |
| | 8 bits | 8 bits | 8 bits | 8 bits | |

### Commande WRITE-BLOCK

Description : commande d'écriture d'un bloc de N bits (champs DATA1 à DATA4) dans la zone mémoire MEM1, à l'adresse spécifiée dans la commande (champ ADRESSE).

Modules exécutant la commande : modules dans l'état SELECTED uniquement.

Réponse à la commande : aucune (une vérification d'écriture peut être faite par le terminal au moyen de la commande READ-BLOCK).

Effet de la commande sur l'état d'un module : aucun.

| Exemple de format : | | | | | | | | | |
|---|---|---|---|---|---|---|---|---|---|
| SOF | CODE (WTRITE-BLOCK) | ADRESSE | DATA1 | DATA2 | DATA3 | DATA4 | CRCl | CRCh | EOF |
| | 8 bits | 8 bits | N/4 bits | N/4 bits | N/4 bits | N/4 bits | 8 bits | 8 bits | |

### Réponses :

### Réponse R(ID)

Description : réponse d'un module à une commande PCALL0, PCALL16, SLOT-MARKER, ou SELECT(ID). La réponse contient le numéro ID du module.

| Exemple de format : | | | | |
|---|---|---|---|---|
| SOF | ID | CRCl | CRCh | EOF |
| | 8 bits | 8 bits | 8 bits | |

### Réponse R-READ-BLOCK

Description : réponse d'un module à une commande READ-BLOCK, contenant un bloc de N bits (champs DATA1 à DATA4) lu dans la zone mémoire MEM1 à l'adresse spécifiée dans la commande.

| Exemple de format : | | | | | | | |
|---|---|---|---|---|---|---|---|
| SOF | DATA1 | DATA2 | DATA3 | DATA4 | CRCl | CRCh | EOF |
| | N/4 bits | N/4 bits | N/4 bits | N/4 bits | 8 bits | 8 bits | |

## Revendications

1. Procédé anticollision pour l'identification et la sélection par un terminal de modules électroniques sans contact (MDL, TAG1-TAG8), dans lequel :
- avant une communication, un module génère un numéro d'identification (ID) aléatoire,
- le terminal envoie une demande d'identification générale (PCALL16) pour déclencher l'envoi de messages d'identification par les modules, et envoie une ou plusieurs demandes d'identification complémentaire non nominatives (PCALL16) lorsque des messages d'identification se trouvent en collision,
- un module est sélectionné lorsqu'il reçoit un message de sélection (SELECT(ID)) comprenant son numéro d'identification,
- en réponse à une demande d'identification générale ou complémentaire, un module non sélectionné envoie un message d'identification (R(ID)) comprenant son numéro d'identification, lorsqu'il atteint, sur une échelle de réponse, une position de réponse déterminée,
- un module répond à une demande d'identification générale ou complémentaire sur une position de réponse qui est fonction de son numéro d'identification (ID), **caractérisé en ce que** :
- un module non sélectionné génère un nouveau numéro d'identification aléatoire lorsqu'il reçoit une demande d'identification complémentaire (PCALL16), de sorte que la position de réponse d'un module non sélectionné en réponse à une demande d'identification complémentaire n'est statistiquement pas la même que sa position de réponse en réponse à une précédente demande d'identification, tout en étant fonction de son numéro d'identification (ID).

2. Procédé selon la revendication 1, dans lequel une demande d'identification générale (PCALL16) est identique en format et en code à une demande d'identification complémentaire (PCALL16).

3. Procédé selon l'une des revendications 1 et 2, dans lequel un module détermine une position de réponse qui est égale à une partie déterminée (ID2) de son numéro d'identification, la partie déterminée (ID2) comprenant des bits de rang déterminé dont le rang ne varie pas lorsque le module répond à des demandes d'identification successives (PCALL16).

4. Procédé selon la revendication 3, dans lequel la partie déterminée (ID2) du numéro d'identification d'un module comprend des bits de poids faible du numéro d'identification (ID).

5. Procédé selon l'une des revendications 1 à 4, dans lequel, pour générer un nouveau numéro d'identification aléatoire, un module conserve une première partie (ID1) de son numéro d'identification actuel, et génère de façon aléatoire une deuxième partie (ID2) du numéro d'identification.

6. Procédé selon la revendication 5, dans lequel un module détermine une position de réponse qui est égale à la deuxième partie (ID2) du numéro d'identification.

7. Procédé selon l'une des revendications 5 et 6, dans lequel la première partie (ID1) du numéro d'identification (ID) d'un module est générée de façon aléatoire par le module avant une communication.

8. Procédé selon l'une des revendications 5 et 6, dans lequel la première partie (ID1) du numéro d'identification d'un module est une donnée fixe enregistrée dans le module.

9. Procédé selon l'une des revendications 1 à 8, dans lequel le terminal envoie également une demande d'identification complémentaire (PCALL16) lorsqu'il reçoit, en réponse à une précédente demande d'identification complémentaire, un message d'identification d'un module qui n'est pas en collision avec un autre message d'identification mais qui comprend un numéro d'identification (ID) déjà utilisé par un autre module.

10. Procédé selon l'une des revendications 1 à 9, dans lequel un module est automatiquement activé (READY) lorsqu'il se trouve en présence d'un champ magnétique émis par le terminal, et génère un numéro d'identification aléatoire lorsqu'il est activé.

11. Procédé selon l'une des revendications 1 à 10, dans lequel les positions de réponse sur l'échelle de réponse sont repérées par des messages de marquage (PCALL16, SLOT-MARKER) envoyés par le terminal.

12. Procédé selon l'une des revendications 1 à 11, dans lequel une demande d'identification générale (PCALL16) forme une commande de marquage de la première position de réponse sur l'échelle de réponse.

13. Procédé selon l'une des revendications 11 et 12, dans lequel une commande de marquage (SLOT-MARKER(i)) comprend un numéro (i) de position de réponse, au moins pour des positions de réponse supérieures à une première position de réponse.

14. Procédé selon la revendication 13, dans lequel le terminal envoie des messages de marquage dans un ordre ne correspondant pas à un rang croissant des positions de réponse.

15. Procédé selon l'une des revendications 1 à 14, dans lequel le terminal n'envoie une demande d'identification complémentaire qu'après que toutes les positions de réponse de l'échelle de réponse ont été parcourues.

16. Procédé selon l'une des revendications 1 à 15, dans lequel, pour initier une communication, le terminal envoie tout d'abord une demande d'identification immédiate (PCALL0) auquel les modules répondent immédiatement, sans échelle de réponse.

17. Procédé selon l'une des revendications 1 à 16, dans lequel un module comprend un état sélectionné (SELECTED) ainsi qu'un état désélectionné ou désactivé (DESELECTED, DEACTIVATED) dans lequel le terminal peut le faire basculer après l'avoir sélectionné, et dans lequel un module dans l'état sélectionné ou dans l'état désélectionné ou désactivé ne répond pas à une demande d'identification générale ou complémentaire (PCALL16).

18. Module électronique sans contact (MDL), comprenant des moyens (DMD, LMD) pour émettre et recevoir des messages sans contact, des moyens (CPU) de décodage de messages reçus agencés pour décoder au moins une demande d'identification générale (PCALL16), une demande d'identification complémentaire non nominative (PCALL16) et un message de sélection (SELECTED(ID)), des moyens pour basculer dans un état sélectionné (SELECTED) sur réception d'un message de sélection (SELECT(ID)) comprenant un numéro d'identification (ID) du module, le module étant agencé pour :
- générer un numéro d'identification aléatoire (ID) avant une communication,
- sur réception d'une demande d'identification générale ou complémentaire, déterminer, si le module n'est pas dans l'état sélectionné, une position de réponse sur une échelle de réponse puis envoyer, lorsque la position de réponse est atteinte, un message d'identification (R(ID)) comprenant le numéro d'identification (ID) du module,
- en réponse à une demande d'identification générale (PCALL16) ou complémentaire (PCALL16), déterminer une position de réponse qui est fonction de son numéro d'identification (ID), **caractérisé en ce qu'**il est agencé pour :
- générer un nouveau numéro d'identification aléatoire (ID) lorsqu'il reçoit une demande d'identification complémentaire (PCALL16), de sorte que la position de réponse du module en réponse à une demande d'identification complémentaire n'est statistiquement pas la même que sa position de réponse en réponse à une précédente demande d'identification, tout en étant fonction de son numéro d'identification.

19. Module selon la revendication 18, agencé pour décoder une demande d'identification complémentaire (PCALL16) identique en format et en code à une demande d'identification générale (PCALL16).

20. Module selon l'une des revendications 18 et 19, agencé pour déterminer une position de réponse qui est égale à une partie déterminée (ID2) de son numéro d'identification (ID), la partie déterminée (ID2) comprenant des bits de rang déterminé dont le rang ne varie pas lorsque le module répond à des demandes d'identification successives.

21. Module selon la revendication 20, dans lequel la partie déterminée (ID2) comprend des bits de poids faible du numéro d'identification du module.

22. Module selon l'une des revendications 18 à 21, agencé pour générer un nouveau numéro d'identification en conservant une première partie (ID1) de son numéro d'identification actuel, et en générant de façon aléatoire une deuxième partie (ID2) du numéro d'identification.

23. Module selon la revendication 22, agencé pour déterminer une position de réponse égale à la deuxième partie (ID2) du numéro d'identification (ID), en réponse à une demande d'identification générale ou complémentaire (PCALL16).

24. Module selon l'une des revendications 22 et 23, dans lequel la première partie (ID1) du numéro d'identification (ID) d'un module est une donnée fixe enregistrée dans le module.

25. Module selon l'une des revendications 22 et 23, dans lequel la première partie (ID1) du numéro d'identification d'un module est générée de façon aléatoire par le module avant une communication.

26. Module selon l'une des revendications 22 à 25, agencé pour déterminer une position de réponse qui est égale à la deuxième partie (ID2) du numéro d'identification (ID).

27. Module selon l'une des revendications 18 à 26, agencé pour basculer automatiquement dans un état activé (READY) lorsqu'il se trouve en présence d'un champ magnétique d'une fréquence déterminée, et générer un numéro d'identification (ID) lorsqu'il bascule dans l'état activé.

28. Module selon l'une des revendications 18 à 27, agencé pour décoder des messages de marquage (SLOT-MARKER) envoyés par le terminal, permettant au module de délimiter des positions de réponse sur l'échelle de réponse.

29. Module selon la revendication 28, agencé pour décoder des messages de marquage (SLOT-MARKER(i)) comprenant un numéro (i) de position de réponse, au moins pour des positions de réponse supérieures à une première position de réponse.

30. Module selon l'une des revendications 28 et 29, agencé pour décoder une demande d'identification générale (PCALL16) en tant que commande de marquage d'une première position de réponse sur l'échelle de réponse.

31. Module selon l'une des revendications 18 à 30, agencé pour décoder une demande d'identification immédiate (PCALL0) et pour envoyer immédiatement, sans échelle de réponse, en réponse à une demande d'identification immédiate (PCALL0), un message d'identification (R(ID)).

32. Module selon l'une des revendications 18 à 31, comprenant un état désélectionné ou désactivé (DESELECTED, DEACTIVATED) dans lequel il peut basculer après avoir été dans l'état sélectionné (SELECTED), le module étant agencé pour ne pas répondre à une demande d'identification générale ou complémentaire lorsqu'il se trouve dans l'état désélectionné ou de désactivation.

## Patentansprüche

1. Antikollisionsverfahren zur Identifizierung und Auswahl durch ein Terminal von elektronischen berührungslosen Modulen (MDL, TAG1-TAG8) nach welchem:
- vor einer Verbindung ein Modul eine zufallsgenerierte Identifikationsnummer (ID) erzeugt,
- das Terminal eine allgemeine Identifikationsanfrage (PCALL16) aussendet, aufgrund welcher die Module Identifikationsnachrichten senden, und bei einer Kollision von Identifikationsnachrichten eine oder mehrere ergänzende, nicht namentliche Identifikationsanfragen (PCALL16) sendet,
- ein Modul ausgewählt wird, wenn es eine Auswahlnachricht (SELECT(ID)) empfängt, die seine Identifikationsnummer enthält,
- aufgrund einer allgemeinen oder ergänzenden Identifikationsanfrage ein nicht ausgewähltes Modul bei Erreichen einer bestimmten Antwortposition auf einer Antwortskala eine seine Identifikationsnummer enthaltende Identifikationsnachricht (R(ID)) sendet,
- ein Modul in einer von seiner Identifikationsnummer (ID) abhängigen Antwortposition auf eine allgemeine oder ergänzende Identifikationsanfrage antwortet,
**dadurch gekennzeichnet, dass**
- ein nicht ausgewähltes Modul beim Empfangen einer ergänzenden Identifikationsanfrage (PCALL16) eine neue zufallsgenerierte Identifikationsnummer erzeugt, so dass die Antwortposition eines nicht ausgewählten Moduls aufgrund einer ergänzenden Identifikationsanfrage statistisch gesehen nicht die gleiche ist, wie ihre Antwortposition bei der Beantwortung einer früheren Identifikationsanfrage, obwohl sie auch von ihrer Identifikationsnummer (ID) abhängig ist.

2. Verfahren nach Anspruch 1, wobei eine allgemeine Identifikationsanfrage (PCALL16) in Format und Code mit einer ergänzenden Identifikationsanfrage (PCALL16) identisch ist.

3. Verfahren nach Anspruch 1 und 2, wobei ein Modul eine Antwortposition bestimmt, die einem bestimmten Teil (ID2) seiner Identifikationsnummer entspricht, wobei der bestimmte Teil (ID2) Bits mit einer bestimmten Stelligkeit umfasst, deren Stelligkeit auch dann unverändert bleibt, wenn das Modul auf aufeinander folgende Identifikationsanfragen (PCALL16) antwortet.

4. Verfahren nach Anspruch 3, wobei der bestimmte Teil (ID2) der Identifikationsnummer eines Moduls niederwertigste Bits der Identifikationsnummer (ID) umfasst.

5. Verfahren nach einem der Ansprüche 1 bis 4, wobei zur Erzeugung einer neuen zufallsgenerierten Identifikationsnummer ein Modul einen ersten Teil (ID1) seiner gegenwärtigen Identifikationsnummer behält und einen zweiten zufallsgenerierten Teil (ID2) der Identifikationsnummer erzeugt.

6. Verfahren nach Anspruch 5, wobei ein Modul eine Antwortposition bestimmt, die dem zweiten Teil (ID2) der Identifikationsnummer entspricht.

7. Verfahren nach einem der Ansprüche 5 und 6, wobei der erste Teil (ID1) der Identifikationsnummer (ID) eines Moduls vor einer Verbindung von dem Modul zufallsgeneriert erzeugt wird.

8. Verfahren nach einem der Ansprüche 5 und 6, wobei der erste Teil (ID1) der Identifikationsnummer eines Moduls eine in dem Modul eingetragene feste Größe ist.

9. Verfahren nach einem der Ansprüche 1 bis 8, wobei das Terminal auch dann eine ergänzende Identifikationsnachricht (PCALL16) aussendet, wenn es aufgrund einer früheren ergänzenden Identifikationsanfrage von einem Modul eine Identifikationsnachricht empfängt, die zwar nicht mit einer anderen Identifikationsnachricht in Kollision geraten ist, aber eine bereits von einem anderen Modul verwendete Identifikationsnummer (ID) enthält.

10. Verfahren nach einem der Ansprüche 1 bis 9, wobei ein Modul dann automatisch aktiviert wird (READY), wenn ein vom Terminal ausgesendetes Magnetfeld vorhanden ist, und, wenn es aktiviert ist, eine zufallsgenerierte Identifikationsnummer erzeugt.

11. Verfahren nach einem der Ansprüche 1 bis 10, wobei die Antwortpositionen auf der Antwortskala durch vom Terminal gesendete Markernachrichten (PCALL16, SLOT-MARKER) markiert werden.

12. Verfahren nach einem der Ansprüche 1 bis 11, wobei eine allgemeine Identifikationsanfrage (PCALL16) einen Markierbefehl zur Markierung der ersten Antwortposition auf der Antwortskala bildet.

13. Verfahren nach einem der Ansprüche 11 und 12, wobei ein Markierbefehl (SLOT-MARKER(i)) eine Nummer (i) einer Antwortposition enthält, mindestens von Antwortpositionen, die auf der Skala höher liegen als eine erste Antwortposition.

14. Verfahren nach Anspruch 13, wobei das Terminal Markernachrichten in einer Reihenfolge sendet, die nicht einer aufsteigenden Reihenfolge der Antwortpositionen entspricht.

15. Verfahren nach einem der Ansprüche 1 bis 14, wobei das Terminal erst dann eine ergänzende Identifikationsanfrage sendet, wenn alle Antwortpositionen auf der Antwortskala durchlaufen wurden.

16. Verfahren nach einem der Ansprüche 1 bis 15, wobei zur Herstellung einer Verbindung das Terminal zunächst eine unmittelbare Identifikationsanfrage (PCALL0) aussendet, auf welche die Module ohne Antwortskala unmittelbar antworten.

17. Verfahren nach einem der Ansprüche 1 bis 16, wobei ein Modul einen ausgewählten Zustand (SELECTED) sowie einen abgewählten bzw. deaktivierten (DESELECTED, DEACTIVATED) Zustand umfasst, zwischen denen das Terminal, nachdem es dieses Modul ausgewählt hat, dieses schalten kann, und wobei ein Modul im ausgewählten Zustand oder im abgewählten bzw. deaktivierten Zustand einer allgemeinen oder ergänzenden Identifikationsanfrage (PCALL16) keine Antwort erteilt.

18. Berührungsloses elektronisches Modul (MDL), umfassend Mittel (DMD, LMD) zum berührungslosen Senden und Empfangen von Nachrichten, Mittel (CPU) zum Entschlüsseln von empfangenen Nachrichten, die derart angeordnet sind, dass sie mindestens eine allgemeine Identifikationsanfrage (PCALL16), eine nicht namentliche ergänzende Identifikationsanfrage (PCALL16) und eine Auswahlnachricht (SELECTED(ID)) entschlüsseln können, Mittel zum Schalten in einen ausgewählten Zustand (SELECTED) nach Erhalt einer eine Identifikationsnummer (ID) des Moduls enthaltenden Auswahlnachricht (SELECT(ID)), wobei das Modul so angeordnet ist, dass es:
- vor einer Verbindung eine zufallsgenerierte Identifikationsnummer (ID) erzeugt,
- nach dem Empfang einer allgemeinen oder ergänzenden Identifikationsanfrage eine Antwortposition auf einer Antwortskala bestimmt, wenn das Modul nicht im ausgewählten Zustand ist, und beim Erreichen der Antwortposition eine Identifikationsnachricht (R(ID)) sendet, die die Identifikationsnummer (ID) des Moduls enthält,
- aufgrund einer allgemeinen (PCALL16) oder ergänzenden Identifikationsanfrage (PCALL16) eine Antwortposition bestimmt, die von seiner Identifikationsnummer (ID) abhängig ist,
**dadurch gekennzeichnet, dass** es so angeordnet ist, dass
- es beim Empfang einer ergänzenden Identifikationsanfrage (PCALL16), eine neue zufallsgenerierte Identifikationsnummer erzeugt, so dass die Antwortposition des Moduls aufgrund einer ergänzenden Identifikationsanfrage statistisch gesehen nicht die gleiche ist wie die Antwortposition, die es aufgrund einer früheren Identifikationsanfrage eingenommen hatte, und dennoch von seiner Identifikationsnummer abhängig ist.

19. Modul nach Anspruch 18, derart angeordnet, dass es eine ergänzende Identifikationsanfrage (PCALL16) entschlüsseln kann, die in Format und Code mit einer allgemeinen Identifikationsanfrage (PCALL16) identisch ist.

20. Verfahren nach einem der Ansprüche 18 und 19, derart angeordnet, dass es eine Antwortposition bestimmen kann, die einem bestimmten Teil (ID2) seiner Identifikationsnummer (ID) entspricht, wobei der bestimmte Teil (ID2) Bits mit einer bestimmten Stelligkeit umfasst, deren Stelligkeit auch dann unverändert bleibt, wenn das Modul auf aufeinander folgende Identifikationsanfragen (PCALL16) antwortet.

21. Modul nach Anspruch 20, wobei der bestimmte Teil (ID2) niederwertigste Bits der Identifikationsnummer des Moduls umfasst.

22. Modul nach einem der Ansprüche 18 bis 21, derart angeordnet, dass es eine neue Identifikationsnummer erzeugt und dabei einen ersten Teil (ID1) seiner aktuellen Identifikationsnummer behält und einen zweiten zufallsgenerierten Teil (ID2) der Identifikationsnummer erzeugt.

23. Modul nach Anspruch 22, derart angeordnet, dass es aufgrund einer allgemeinen oder ergänzenden Identifikationsanfrage (PCALL16) eine Antwortposition bestimmt, die dem zweiten Teil (ID2) der Identifikationsnummer (ID) entspricht.

24. Modul nach einem der Ansprüche 22 und 23, wobei der erste Teil (ID1) der Identifikationsnummer (ID) eines Moduls eine im Modul eingetragene feste Größe ist.

25. Modul nach einem der Ansprüche 22 und 23, wobei der erste Teil (ID1) der Identifikationsnummer (ID) eines Moduls vor einer Verbindung von dem Modul zufallsgeneriert erzeugt wird.

26. Modul nach einem der Ansprüche 22 bis 25, derart angeordnet, dass es eine Antwortposition bestimmt, die dem zweiten Teil (ID2) der Identifikationsnummer (ID) entspricht.

27. Modul nach einem der Ansprüche 18 bis 26, derart angeordnet, dass es automatisch in einen aktivierten Zustand (READY) schaltet, wenn ein Magnetfeld mit einer bestimmten Frequenz vorhanden ist, und eine zufallsgenerierte Identifikationsnummer (ID) erzeugt, wenn es in den aktivierten Zustand schaltet.

28. Modul nach einem der Ansprüche 18 bis 27, derart angeordnet, dass es vom Terminal gesendete Markernachrichten (SLOT-MARKER) entschlüsselt, wodurch dem Modul ermöglicht wird, Antwortpositionen auf der Antwortskala zu definieren.

29. Modul nach Anspruch 28, derart angeordnet, dass es Markernachrichten (SLOT-MARKER(i)) entschlüsselt, die eine Nummer (i) einer Antwortposition enthalten, mindestens von Antwortpositionen, die auf der Skala höher liegen als eine erste Antwortposition.

30. Modul nach einem der Ansprüche 28 und 29, derart angeordnet, dass es eine allgemeine Identifikationsanfrage (PCALL16) als Markierbefehl zur Markierung einer ersten Antwortposition auf der Antwortskala entschlüsselt.

31. Modul nach einem der Ansprüche 18 bis 30, derart angeordnet, dass es eine unmittelbare Identifikationsanfrage (PCALL0) entschlüsselt und aufgrund einer unmittelbaren Identifikationsanfrage (PCALL0) unmittelbar ohne Antwortskala eine Identifikationsnachricht (R(ID)) aussendet.

32. Modul nach einem der Ansprüche 18 bis 31, umfassend einen abgewählten oder deaktivierten (DESELECTED, DEACTIVATED) Zustand, in den es aus dem ausgewählten Zustand (SELECTED) geschaltet werden kann, wobei das Modul derart angeordnet ist, dass es im abgewählten oder deaktivierten Zustand auf eine allgemeine oder ergänzende Identifikationsanfrage nicht antwortet.

## Claims

1. Anti-collision method to identify and select contactless electronic modules (MDL, TAG1-TAG8) by a terminal, in which:
- prior to a communication, a module generates a random identification number (ID),
- the terminal sends a general identification request (PCALL16) to trigger the sending of identification messages by the modules, and sends one or more non-nominative complementary identification requests (PCALL16) when identification messages collide,
- a module is selected when it receives a select message (SELECT(ID)) comprising its identification number,
- in response to a general or complementary identification request, a non-selected module sends an identification message (R(ID)) comprising its identification number, when it reaches a determined time slot on a time scale,
- a module responds to a general or complementary identification request on a time slot that varies according to its identification number (ID),
**characterised in that**:
- a non-selected module generates a new random identification number when it receives a complementary identification request (PCALL16), such that the time slot of a non-selected module in response to a complementary identification request is not statistically the same as its time slot in response to a previous identification request, while varying according to its identification number (ID).

2. Method according to claim 1, in which a general identification request (PCALL16) is identical in format and in code to a complementary identification request (PCALL16).

3. Method according to one of claims 1 and 2, in which a module determines a time slot that is equal to a determined part (ID2) of its identification number, the determined part (ID2) comprising bits of determined rank the rank of which does not vary when the module responds to successive identification requests (PCALL16).

4. Method according to claim 3, in which the determined part (ID2) of the identification number of a module comprises least significant bits of the identification number (ID).

5. Method according to one of claims 1 to 4, in which, to generate a new random identification number, a module keeps a first part (ID1) of its current identification number, and randomly generates a second part (ID2) of the identification number.

6. Method according to claim 5, in which a module determines a time slot that is equal to the second part (ID2) of the identification number.

7. Method according to one of claims 5 and 6, in which the first part (ID1) of the identification number (ID) of a module is generated randomly by the module prior to a communication.

8. Method according to one of claims 5 and 6, in which the first part (ID1) of the identification number of a module is a constant datum logged in the module.

9. Method according to one of claims 1 to 8, in which the terminal also sends a complementary identification request (PCALL16) when it receives, in response to a previous complementary identification request, an identification message from a module that is not colliding with another identification message but which comprises an identification number (ID) already used by another module.

10. Method according to one of claims 1 to 9, in which a module is automatically activated (READY) when it is in the presence of a magnetic field sent by the terminal, and generates a random identification number when it is activated.

11. Method according to one of claims 1 to 10, in which the time slots on the time scale are marked by marking commands (PCALL16, SLOT-MARKER) sent by the terminal.

12. Method according to one of claims 1 to 11, in which a general identification request (PCALL16) forms a marking command of the first time slot on the time scale.

13. Method according to one of claims 11 and 12, in which a marking command (SLOT-MARKER(i)) comprises a time slot number (i), at least for time slots that are above a first time slot.

14. Method according to claim 13, in which the terminal sends marking commands in an order that does not correspond to an ascending rank of the time slots.

15. Method according to one of claims 1 to 14, in which the terminal only sends a complementary identification request after all the time slots of the time scale have been covered.

16. Method according to one of claims 1 to 15, in which, to start a communication, the terminal first of all sends an immediate identification request (PCALL0) to which the modules respond immediately, without time scale.

17. Method according to one of claims 1 to 16, in which a module comprises a selected state (SELECTED) and a deselected or deactivated state (DESELECTED, DEACTIVATED) to which the terminal may cause it to switch after selecting it, and in which a module in the selected state or in the deselected or deactivated state does not respond to a general or complementary identification request (PCALL16).

18. Contactless electronic module (MDL), comprising means (DMD, LMD) for sending and receiving messages without contact, means (CPU) for decoding received messages arranged to decode at least one general identification request (PCALL16), one non-nominative complementary identification request (PCALL16) and a select message (SELECTED(ID)), means for switching to a selected state (SELECTED) upon receiving a select message (SELECT(ID)) comprising an identification number (ID) of the module, the module being arranged to:
- generate a random identification number (ID) before a communication,
- upon receiving a general or complementary identification request, determine, if the module is not in the selected state, a time slot on a time scale then send, when the time slot is reached, an identification message (R(ID)) comprising the identification number (ID) of the module,
- in response to a general (PCALL16) or complementary (PCALL16) identification request, determine a time slot that varies according to its identification number (ID), **characterised in that** it is arranged to:
- generate a new random identification number (ID) when it receives a complementary identification request (PCALL16), such that the time slot of the module in response to a complementary identification request is not statistically the same as its time slot in response to a previous identification request, while varying according to its identification number.

19. Module according to claim 18, arranged to decode a complementary identification request (PCALL16) identical in format and in code to a general identification request (PCALL16).

20. Module according to one of claims 18 and 19, arranged to determine a time slot that is equal to a determined part (ID2) of its identification number (ID), the determined part (ID2) comprising bits of determined rank the rank of which does not vary when the module responds to successive identification requests.

21. Module according to claim 20, in which the determined part (ID2) comprises least significant bits of the identification number of the module.

22. Module according to one of claims 18 to 21, arranged to generate a new identification number by keeping a first part (ID1) of its current identification number, and by randomly generating a second part (ID2) of the identification number.

23. Module according to claim 22, arranged to determine a time slot equal to the second part (ID2) of the identification number (ID), in response to a general or complementary identification request (PCALL16).

24. Module according to one of claims 22 and 23, in which the first part (ID1) of the identification number (ID) of a module is a constant datum logged in the module.

25. Module according to one of claims 22 and 23, in which the first part (ID1) of the identification number of a module is generated randomly by the module prior to a communication.

26. Module according to one of claims 22 to 25, arranged to determine a time slot that is equal to the second part (ID2) of the identification number (ID).

27. Module according to one of claims 18 to 26, arranged to switch automatically to an activated state (READY) when it is in the presence of a magnetic field of a determined frequency, and to generate an identification number (ID) when it switches to the activated state.

28. Module according to one of claims 18 to 27, arranged to decode marking commands (SLOT-MARKER) sent by the terminal, enabling the module to mark out time slots on the time scale.

29. Module, according to claim 28, arranged to decode marking commands (SLOT-MARKER(i)) comprising a time slot number (i), at least for time slots that are above a first time slot.

30. Module according to one of claims 28 and 29, arranged to decode a general identification request (PCALL16) as a marking command of a first time slot on the time scale.

31. Module according to one of claims 18 to 30, arranged to decode an immediate identification request (PCALL0) and to send immediately, without time scale, in response to an immediate identification request (PCALL0), an identification message (R(ID)).

32. Module according to one of claims 18 to 31, comprising a deselected or deactivated state (DESELECTED, DEACTIVATED) to which it may switch after being in the selected state (SELECTED), the module being arranged to not respond to a general or complementary identification request when it is in the deselected or deactivated state.
